# EUROPEAN PATENT SPECIFICATION

(11) **EP 3 890 257 B1**
(45) Date of publication and mention of the grant of the patent: **30.08.2023**
(21) Application number: 20773120.9
(22) Date of filing: 29.02.2020
(51) Int. Cl.: H04L 47/125, H04L 45/24, H04L 49/00

(54) **FLOW BALANCING METHOD AND DEVICE**
FLUSSAUSGLEICHSVERFAHREN UND VORRICHTUNG
PROCÉDÉ ET DISPOSITIF D'ÉQUILIBRAGE DE FLUX

(30) Priority: 18.03.2019 CN 201910205012
(43) Date of publication of application: 06.10.2021
(73) Proprietor: Huawei Technologies Co., Ltd., Longgang District Shenzhen, Guangdong 518129 (CN)
(72) Inventor: LIU, Quan, Shenzhen, Guangdong 518129 (CN); TIAN, Yawen, Shenzhen, Guangdong 518129 (CN)
(74) Representative: Pfenning, Meinig & Partner mbB
(86) International application number: PCT/CN2020/077311
(87) International publication number: WO 2020/187006

(56) References cited:
- US-A1- 2013 077 492
- US-A1- 2017 359 261

## Description

### TECHNICAL FIELD

Embodiments of this application relate to the field of communications technologies, and in particular, to a traffic balancing method and apparatus.

### BACKGROUND

An Ethernet trunk (Eth-Trunk) mechanism is used to bind a plurality of physical ports of an Ethernet device into a logical port, which is also referred to as an Eth-Trunk port. The physical ports that are bound together are referred to as member ports of the logical port. The Ethernet device can use the Eth-Trunk mechanism to increase network bandwidth and implement requirements such as load balancing and service protection. An Eth-Trunk port is a logical port and cannot forward packets. Therefore, when forwarding the packets, the Eth-Trunk port forwards traffic that is sent to the logical port to a physical port of the logical port according to a load balancing algorithm.

Based on the Eth-Trunk mechanism, an Eth-Trunk connection mechanism applicable to an Eth-Trunk connection system is derived. The Eth-Trunk connection system includes a plurality of levels of Ethernet devices. The plurality of Ethernet devices are connected with each other. Traffic is evenly allocated to member ports of an Eth-Trunk port of a first-level Ethernet device after hash calculation is performed on the first-level Ethernet device, so that the traffic reaches a second-level Ethernet device. Then, hash calculation is performed on the second-level Ethernet device, so that the traffic is transmitted to a third-level Ethernet device in a shared manner, and so on. In a process of performing the hash calculation, an Ethernet device performs the hash calculation based on several specific features of a packet, to determine a physical port of a logical port from which the traffic should be sent. The specific feature is also referred to as a hash factor. The Ethernet devices at each level use a same hash algorithm, and calculation results of the Ethernet devices at each level are similar. In other words, the physical port determined by the Ethernet devices at each level based on a hash factor is fixed. As a result, traffic that reaches the Ethernet devices at each level can be transmitted only from several specific physical ports of the logical port of the Ethernet device, causing heavy traffic on some physical ports, while traffic on other physical ports is light.

To prevent uneven load balancing among the member ports of the Eth-Trunk port, a conventional method manually modifies the hash factor used in the hash calculation and adjusts traffic sent to each physical port based on a new hash factor. However, even if the new hash factor is used, a calculated physical port is also fixed, and the uneven load balancing among the member ports of the Eth-Trunk port cannot be avoided. In addition, during hash factor modification, an appropriate hash factor can be obtained only after a plurality of attempts. This modification process may cause a service exception.

US 2017/359261 A1 describes a method of load balancing. The method comprises accessing link statistics for egress ports of a networking device. The link statistics for each of the egress ports is based on traffic rates at the respective egress port for each of a plurality of recent time periods. The method also includes predicting a future link statistic for each of the plurality of egress ports by applying a separate fractal analysis to the link statistics for each of the egress ports. The future link statistic is for a time period that immediately follows the plurality of recent time periods. The method also includes balancing a load at the plurality of egress ports based on the predicted future link statistic for each of the plurality of egress ports. A method for configuration of a network device is described in US 2013/077492 A1.

### SUMMARY

The present invention is defined by the independent claims. Particular embodiments of the present invention are specified by the dependent claims. Aspects of this application further provide a traffic balancing method and apparatus, to evenly balance traffic among member ports of an Eth-Trunk port by automatically adjusting the traffic of the member ports of the Eth-Trunk port.

According to a first aspect, an embodiment of this application provides a traffic balancing method. The method may be applied to an Ethernet device, or may be applied to a chip in an Ethernet device. The following describes the method by using an example in which the method is applied to the Ethernet device. The method includes: The Ethernet device sends a query packet to a controller. The query packet carries load information of each physical port in a plurality of physical ports of a logical port of the Ethernet device. The Ethernet device receives a response packet sent by the controller. The response packet carries a weight factor of each physical port, and the weight factor of each physical port is positively correlated with an amount of traffic that is of the logical port and that can be shared by the physical port. When sending a packet through the logical port, the Ethernet device adjusts, based on the weight factor of each physical port, traffic sent to each physical port. By using this method, a user does not need to manually adjust a hash factor used in hash calculation. Instead, the Ethernet device automatically adjusts the traffic of each physical port. This does not affect currently transmitted service data and does not cause a service exception.

The load information of one physical port is used to indicate a percentage of consumed bandwidth of the physical port in total bandwidth of the physical port, and that the Ethernet device adjusts, based on the weight factor of each physical port, traffic sent to each physical port includes: The Ethernet device determines whether the percentage indicated by the load information of each physical port of the logical port varies. If percentage variation indicated by the load information of each physical port does not exceed a second preset threshold, the Ethernet device adjusts, based on the weight factor of each physical port, the traffic sent to each physical port. By using this method, before adjusting, based on the weight factor of each physical port, the traffic sent to each physical port, the Ethernet device determines whether the percentage variation indicated by the load information of each physical port in the physical ports exceeds the second preset threshold. The traffic sent to each physical port is adjusted based on the weight factor only when the variation of the percentages indicated by the load information of all the physical ports does not exceed the second preset threshold.

The method further includes: If the percentage variation indicated by load information of one or more physical ports in the plurality of physical ports exceeds the second preset threshold, the Ethernet device re-collects load information of each physical port. The Ethernet device sends a query packet carrying the re-collected load information to the controller. By using this method, if the percentage variation indicated by the load information of all or some of the physical ports exceeds the second preset threshold, the Ethernet device re-collects load information of the physical ports and sends the load information of the physical ports to the controller to re-determine the weight factor. This avoids that the weight factor is not applicable when the percentage of the consumed bandwidth in the total bandwidth of the physical port greatly varies.

In a feasible design, the feature that the Ethernet device sends a query packet to a controller includes: The Ethernet device determines whether traffic of at least one physical port in the plurality of physical ports exceeds a first preset threshold. If the traffic of the at least one physical port exceeds the first preset threshold, the Ethernet device sends the query packet to the controller. By using this method, the Ethernet device actively reports the load information of each physical port of the logical port to the controller, so that the controller determines the weight factor based on the load information, and adjusts the traffic of each physical port without modifying the hash factor.

In a feasible design, the feature that the Ethernet device sends a query packet to a controller includes: The Ethernet device sends the query packet to the controller for a plurality of times. By using this method, the Ethernet device periodically or aperiodically reports the load information of each physical port of the logical port to the controller, so that the controller determines the weight factor based on the load information, and adjusts the traffic of each physical port without modifying the hash factor.

In a feasible design, in addition to a preset hash factor, a minimum weight factor is further configured for the Ethernet device. When a packet needs to be sent through a logical port 2, the Ethernet device determines a physical port based on the preset hash factor, and then the Ethernet device determines whether a weight factor of the physical port is greater than the minimum weight factor. If the weight factor of the physical port is greater than the minimum weight factor, the Ethernet device forwards the packet through the physical port. If the weight factor of the physical port is less than or equal to the minimum weight factor, the Ethernet device forwards the packet through another physical port. By using this method, when sending the packet through the logical port, the Ethernet device determines, based on the preset hash factor, the physical port used to forward the packet, and then determines, based on the weight factor, whether the packet can be forwarded through the physical port determined based on the hash factor. The traffic sent to each physical port can be adjusted without modifying the hash factor. An adjustment process is simple and does not affect services.

In a feasible design, in addition to the preset hash factor, a weight factor difference threshold is further configured for the Ethernet device. When the packet needs to be sent through the logical port 2, the Ethernet device determines the physical port based on the preset hash factor, and then the Ethernet device determines whether a difference between the weight factor of the physical port and a maximum weight factor is greater than or equal to the weight factor difference threshold. If the difference is greater than or equal to the weight factor difference threshold, the Ethernet device sends the packet through another physical port. If the difference is less than the weight factor difference threshold, the Ethernet device sends the packet through the physical port calculated through a hash algorithm. By using this method, when sending the packet through the logical port, the Ethernet device determines, based on the preset hash factor, the physical port used to forward the packet, and then determines, based on the weight factor, whether the packet can be forwarded through the physical port determined based on the hash factor. The traffic sent to each physical port can be adjusted without modifying the hash factor. An adjustment process is simple and does not affect services.

In a feasible design, that the Ethernet device adjusts, based on the weight factor of each physical port, traffic sent to each physical port includes: The Ethernet device adjusts, based on the preset hash factor and the weight factor of each physical port, the traffic sent to each physical port. By using this method, when sending the packet through the logical port, the Ethernet device determines, based on the preset hash factor, the physical port used to forward the packet, and then determines, based on the weight factor, whether the packet can be forwarded through the physical port determined based on the hash factor. The traffic sent to each physical port can be adjusted without modifying the hash factor. The adjustment process is simple and does not affect the services.

According to a second aspect, an embodiment of the present invention provides a traffic balancing method, including: A controller receives a query packet sent by an Ethernet device. The query packet carries load information of each physical port in a plurality of physical ports of a logical port of the Ethernet device. The controller determines a weight factor of each physical port based on the load information of each physical port. The weight factor of each physical port is positively correlated to an amount of traffic that is of the logical port and that can be shared by the physical port. The controller sends a response packet to the Ethernet device. The response packet carries the weight factor of each physical port. By using this method, a user does not need to manually adjust a hash factor used in hash calculation. Instead, the Ethernet device automatically adjusts the traffic of each physical port. This does not affect currently transmitted service data and does not cause a service exception.

The load information of each physical port is used to indicate a percentage of consumed bandwidth of the physical port in total bandwidth of the physical port, and that the controller determines a weight factor of each physical port based on the load information of each physical port includes: The controller determines a least common multiple of percentages of the plurality of physical ports based on the percentage of each physical port. The controller determines the weight factor of each physical port based on the least common multiple. The weight factor of one physical port = the common multiple/the percentage of the physical port. By using this method, the controller can determine the weight factor. The method further comprises receiving, by the controller, a query packet carrying re-collected load information when a percentage variation indicated by the load information of each physical port exceeds a second preset threshold.

According to a third aspect, an embodiment of this application provides a traffic balancing apparatus. The apparatus may be an Ethernet device, or may be a chip in an Ethernet device. The apparatus may include a processing unit, a sending unit, and a receiving unit. When the apparatus is the Ethernet device, the processing unit may be a processor, the sending unit may be a transmitter, and the receiving unit may be a receiver. The Ethernet device may further include a storage unit, and the storage unit may be a memory. The storage unit is configured to store an instruction, and the processing unit executes the instruction stored in the storage unit, to enable the Ethernet device to implement the function in the first aspect or the possible implementations of the first aspect. When the apparatus is the chip in the Ethernet device, the processing unit may be a processor, and the transceiver unit may be an input/output interface, a pin, a circuit, or the like. The processing unit executes an instruction stored in the storage unit, to enable the Ethernet device to implement the function in the first aspect or the possible implementations of the first aspect. The storage unit may be a storage unit (for example, a register or a cache) in the chip, or may be a storage unit (for example, a read-only memory or a random access memory) outside the chip in the Ethernet device. The load information of each physical port is used to indicate a percentage of consumed bandwidth of the physical port in total bandwidth of the physical port. The processing unit is configured to: determine whether the percentage indicated by the load information of each physical port of the logical port varies. If percentage variation indicated by the load information of each physical port does not exceed a second preset threshold, the traffic sent to each physical port is adjusted based on the weight factor of each physical port. If the percentage variation indicated by the load information of each physical port exceeds the second preset threshold, load information of each physical port is re-collected, and a query packet carrying the re-collected load information is sent to the controller.

According to a fourth aspect, an embodiment of this application provides a traffic balancing apparatus. The apparatus may be a controller, or may be a chip in a controller. The apparatus may include a processing unit, a sending unit, and a receiving unit. When the apparatus is a controller, the processing unit may be a processor, the sending unit may be a transmitter, and the receiving unit may be a receiver. The controller may further include a storage unit, and the storage unit may be a memory. The storage unit is configured to store an instruction, and the processing unit executes the instruction stored in the storage unit, to enable the controller to implement the function in the second aspect or the possible implementations of the second aspect. When the apparatus is the chip in the controller, the processing unit may be a processor, and the transceiver unit may be an input/output interface, a pin, a circuit, or the like. The processing unit executes an instruction stored in the storage unit, to enable the controller to implement the function in the second aspect or the possible implementations of the second aspect. The storage unit may be a storage unit (for example, a register or a cache) in the chip, or may be a storage unit (for example, a read-only memory or a random access memory) outside the chip in the controller. The load information of each physical port is used to indicate a percentage of consumed bandwidth of the physical port in total bandwidth of the physical port. The processing unit is configured to determine, based on the percentage of each physical port, a least common multiple of percentages of the plurality of physical ports; and determine, based on the least common multiple, the weight factor of each physical port, wherein the weight factor of one physical port = the least common multiple/a percentage of the physical port. The receiving unit is configured to receive a query packet carrying re-collected load information when a percentage variation indicated by the load information of each physical port exceeds a second preset threshold.

According to a fifth aspect, an embodiment of this application provides a computer program product including an instruction. When the computer program product runs on a processor, the processor is enabled to perform the method according to any one of the first aspect or the possible implementations of the first aspect.

According to a sixth aspect, an embodiment of this application provides a computer program product including an instruction. When the computer program product runs on a processor, the processor is enabled to perform the method according to any one of the second aspect or the possible implementations of the second aspect.

According to a seventh aspect, an embodiment of this application provides a computer-readable storage medium. The computer-readable storage medium stores an instruction, and when the instruction is run on a computer, the computer is enabled to perform the method according to any one of the first aspect or the possible implementations of the first aspect.

According to an eighth aspect, an embodiment of this application provides a computer-readable storage medium. The computer-readable storage medium stores an instruction, and when the instruction is run on a computer, the computer is enabled to perform the method according to any one of the second aspect or the possible implementations of the second aspect.

According to a ninth aspect, an embodiment of this application provides a traffic balancing system. The system includes a first traffic balancing apparatus and a second traffic balancing apparatus. The first traffic balancing apparatus is the traffic balancing apparatus in the third aspect, and the second traffic balancing apparatus is the traffic balancing apparatus in the fourth aspect.

According to the traffic balancing method and apparatus provided in the embodiments of this application, an Ethernet device sends a query packet carrying load information of each physical port of a logical port of the Ethernet device to a controller. The controller receives the query packet, and determines a weight factor of each physical port of the logical port based on the load information of each physical port. The weight factor of each physical port is positively correlated with an amount of traffic that is of the logical port and that can be shared by the physical port. Then, the controller sends a response packet carrying the weight factor of each physical port to the Ethernet device, so that the Ethernet device adjusts, based on the weight factor of each physical port, traffic sent to each physical port. In this process, a user does not need to manually adjust a hash factor used in hash calculation. Instead, the Ethernet device automatically adjusts the traffic of each physical port. This does not affect currently transmitted service data and does not cause a service exception.

### BRIEF DESCRIPTION OF DRAWINGS

FIG. 1 is a schematic diagram of Eth-Trunk connection forwarding;
FIG. 2 is a schematic diagram of an operating environment to which a traffic balancing method is applicable according to an embodiment of this application;
FIG. 3 is a flowchart of a traffic balancing method according to an embodiment of this application;
FIG. 4 is a schematic diagram of a structure of a UDP packet in a traffic balancing method according to an embodiment of this application;
FIG. 5 is a schematic diagram of a structure of a controller according to an embodiment of this application;
FIG. 6 is a schematic diagram of a structure of a traffic balancing apparatus according to an embodiment of this application;
FIG. 7 is a schematic diagram of a structure of another traffic balancing apparatus according to an embodiment of this application; and
FIG. 8 is a schematic diagram of a structure of still another traffic balancing apparatus according to an embodiment of this application.

### DESCRIPTION OF EMBODIMENTS

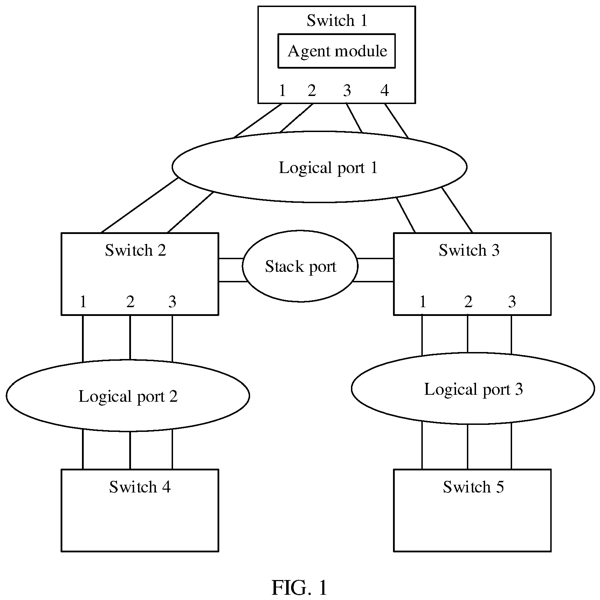

An Eth-Trunk connection mechanism applicable to an Eth-Trunk connection system is derived based on the Eth-Trunk mechanism. For example, FIG. 1 is a schematic diagram of Eth-Trunk connection forwarding. Refer to FIG. 1. In the Eth-Trunk connection scenario, an Ethernet device is specifically a switch. Switches 1 to 5 are devices of a same type. The switch 1 is a first-level switch, the switch 2 and the switch 3 are second-level switches, and the switch 2 and the switch 3 form a stack, and the switch 4 and the switch 5 are third-level switches. The switch 1, the switch 2, and the switch 3 separately pre-store a hash algorithm and a hash factor used in the hash algorithm. The switch 1 is connected to a stacking device formed by the switch 2 and the switch 3 through a logical port 1, the switch 2 is connected to the switch 4 through a logical port 2, and the switch 3 is connected to the switch 5 through a logical port 3. The logical port 1 includes four physical ports: a physical port 1, a physical port 2, a physical port 3, and a physical port 4. The logical ports 2 and 3 each include three physical ports. When traffic needs to be forwarded through the logical port 1, the switch 1 performs hash calculation on the traffic based on the hash factor and the hash algorithm, and allocates the traffic to the physical port 1 (denoted as sub-traffic 1), the physical port 2 (denoted as sub-traffic 2), the physical port 3 (denoted as sub-traffic 3), or the physical port 4 (denoted as sub-traffic 4) of the logical port 1. Then, the sub-traffic 1 and the sub-traffic 2 arrive at the switch 2, and the sub-traffic 3 and the sub-traffic 4 arrive at the switch 3. The switch 2 performs hash calculation on the sub-traffic 1 and the sub-traffic 2 based on the hash factor and the hash algorithm, and allocates the sub-traffic 1 and the sub-traffic 2 to each physical port of the logical port 2. Similarly, the switch 3 performs hash calculation on the sub-traffic 3 and the sub-traffic 4 based on the hash factor and the hash algorithm, and allocates the sub-traffic 3 and the sub-traffic 4 to a specific physical port of the logical port 3. The hash factor is a parameter used in the hash calculation, and may be specifically one or more features (collectively referred to as packet features) of a received packet. For example, the hash factor may be a source media access control (MAC) address, a destination MAC address, a source Internet Protocol (IP) address, a destination IP address, a source port number, a destination port number, or the like. Traffic includes packets. When hash calculation is performed on the traffic based on a hash factor and a hash algorithm, a switch extracts a value (namely, the packet features) corresponding to the hash factor from the received packet, and performs the hash calculation on the packet features based on the hash algorithm, to determine a physical port of a logical port from which the packet should be sent.

In a scenario, the switch 1 allocates, based on the hash algorithm, a packet that arrives at the logical port 1 to the physical port 1, the physical port 2, the physical port 3, or the physical port 4. A percentage of consumed bandwidth of each physical port in total bandwidth of the physical port is 60%. For one physical port, the percentage of the consumed bandwidth of the physical port in the total bandwidth of the physical port is also referred to as traffic bandwidth.

Because the switch 2, the switch 3, and the switch 1 use the same hash algorithm, hash calculation results of the switch 2, the switch 3, and the switch 1 are relatively similar. Consequently, the traffic is unevenly allocated to the logical port 2 and the logical port 3. For example, traffic bandwidth of the physical port 1, the physical port 2, and the physical port 3 of the logical port 2 is respectively 20%, 40%, and 95%. If the traffic arriving at the switch 2 is heavy, packet loss easily occurs on a physical port 3 of the logical port 2 due to a data amount exceeds bandwidth.

To prevent uneven traffic allocation, the hash factor or the hash algorithm used in the hash calculation may be manually modified. For example, the packet features used for the hash calculation are modified. For another example, an offset is performed on the hash calculation result. However, even if a new hash factor is used, the calculated physical port is fixed. In a multi-level Eth-Trunk port scenario, uneven load balancing among member ports of an Eth-Trunk port except a first-level Eth-Trunk port cannot be avoided. In addition, during hash factor modification, an appropriate hash factor can be obtained only after a plurality of attempts. This modification process may cause a service exception.

In view of this, embodiments of this application provide a traffic balancing method and apparatus, to evenly balance traffic among the member ports of the Eth-Trunk port by automatically adjusting the traffic of the member ports of the Eth-Trunk port.

In the embodiments of this application, the words such as "example" or "for example" are used to represent giving an example, an illustration, or a description. Any embodiment or design scheme described as "example" or "for example" in the embodiments of this application should not be explained as being more preferred or having more advantages than another embodiment or design scheme. Exactly, use of the word such as "example" or "for example" is intended to present a related concept in a specific manner.

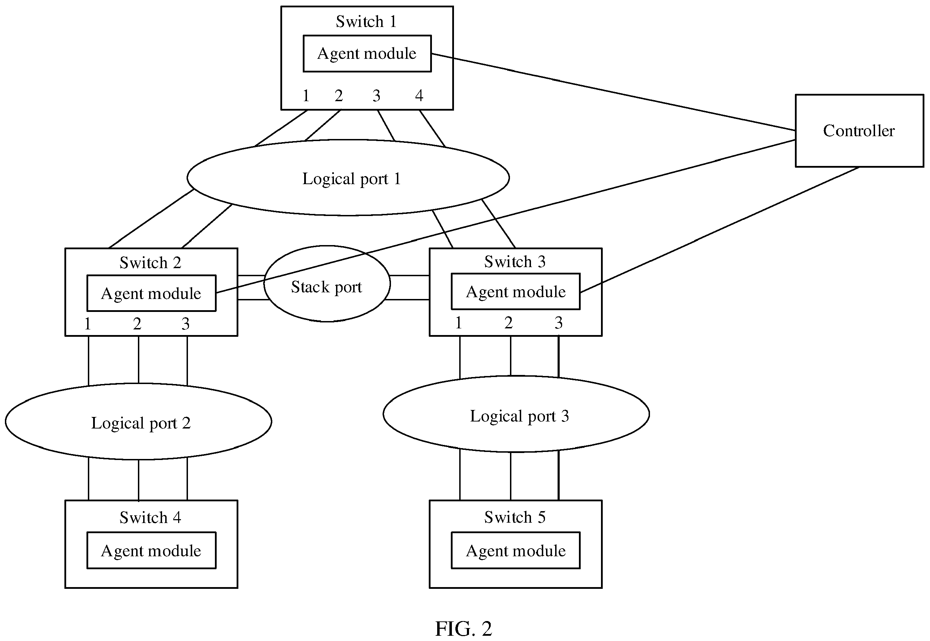

FIG. 2 is a schematic diagram of an operating environment to which a traffic balancing method is applicable according to an embodiment of this application. Refer to FIG. 2. The operating environment includes a controller and a plurality of switches (only a switch 1, a switch 2, and a switch 3 are shown in the figure), and a network connection is established between the controller and each switch. The controller may also be considered as a collector, a server, or the like. The switch can be a layer 2 switch or a layer 3 switch that supports an Eth-Trunk mechanism. Based on the Eth-Trunk mechanism, a plurality of physical ports of a switch are bound as a logical port. The switch can use the Eth-Trunk mechanism to improve network bandwidth, implement load balancing, and protect services.

In FIG. 2, each switch shows only one logical port, and a quantity of physical ports of each logical port is 3 or 4. However, in actual application, a quantity of logical ports of one Ethernet device is very large, for example, may be 1000 or more, and the quantity of physical ports of each logical port is also very large. For example, 16 boards can be inserted into one Ethernet device, and each board supports at least 48 physical ports. Therefore, the Ethernet device has at least 768 (48 x 16) physical ports. If two Ethernet devices form a stack, the stack has at least 1500 physical ports, and 1000 logical ports can be obtained based on the 1500 physical ports. If traffic of each logical port is balanced by the Ethernet device, the Ethernet device processes a large amount of data, seriously wasting computing resources and memory of the Ethernet device. Therefore, in this embodiment of this application, the controller is deployed, and the controller processes a weight factor and the like, to balance the traffic of each logical port of the Ethernet device on an entire network.

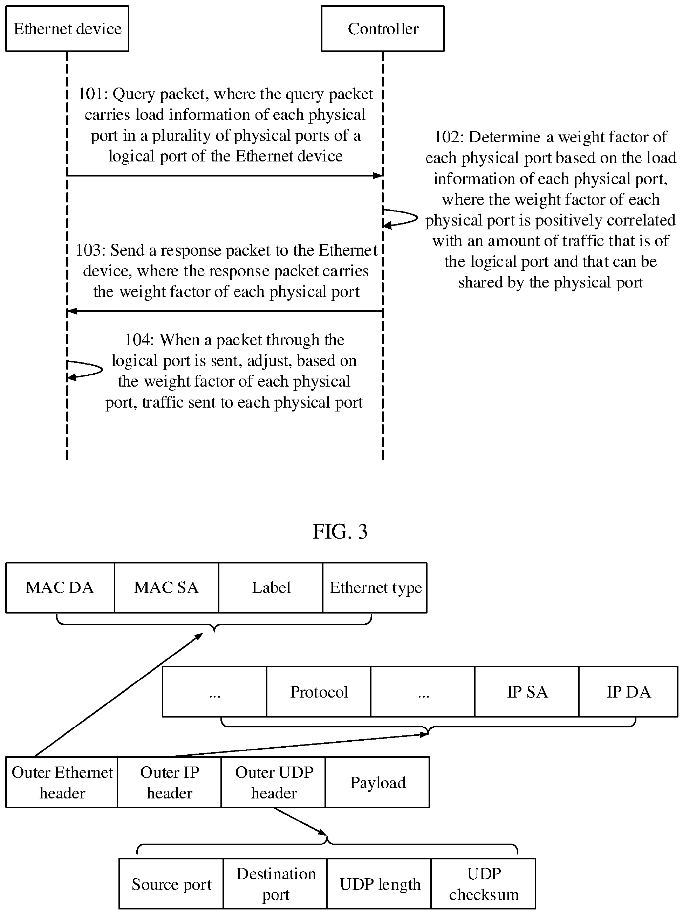

The following describes in detail the traffic balancing method in this embodiment of this application based on the architecture shown in FIG. 2. For example, FIG. 3 is a flowchart of a traffic balancing method according to an embodiment of this application. The method includes steps 101 to 104.

Step 101: An Ethernet device sends a query packet to a controller, where the query packet carries load information of each physical port in a plurality of physical ports of a logical port of the Ethernet device.

Correspondingly, the controller receives the query packet.

For example, an agent module is pre-deployed on the Ethernet device, and is configured to collect the load information of each physical port of the logical port of the Ethernet device and report the load information to the controller. The controller receives the query packet. In a process of collecting the load information, the agent module collects traffic statistics on each physical port of the logical port, and determines a percentage of consumed bandwidth of each physical port of the logical port in total bandwidth of the physical port. For example, still refer to FIG. 2. A logical port 2 has three physical ports, and maximum bandwidth of the three physical ports are 200 megabits (M), 100 M, and 50 M. Based on the statistics collected by the agent module, consumed bandwidth of a physical part 1 is 40 M, accounting for 20% of total bandwidth of the physical port 1. Consumed bandwidth of a physical port 2 is 40 M, accounting for 40% of total bandwidth of the physical port 2. Consumed bandwidth of a physical port 3 is 47.5 M, accounting for 95% of total bandwidth of the physical port 3.

Step 102: The controller determines a weight factor of each physical port based on the load information of each physical port. The weight factor of each physical port is positively correlated with an amount of traffic that is of the logical port and that can be shared by the physical port.

For example, for one logical port, the controller determines the weight factor of each physical port based on the load information of each physical port of the logical port. The weight factor of each physical port is positively correlated with the amount of the traffic that is of the logical port and that can be shared by the physical port. To be specific, for the one logical port, among the physical ports of the logical port, a physical port with a larger weight factor can share larger traffic. In other words, the physical port with the larger weight factor has a smaller percentage of currently consumed bandwidth in the total bandwidth of the physical port.

The example in step 101 is still used. Assuming that the load information is the percentage of the consumed bandwidth of each physical port in the total bandwidth, the controller determines, based on the three percentages, that the weight factors of the physical port 1, the physical port 2, and the physical port 3 are respectively 3.8, 1.9, and 0.8. To be specific, traffic that can be shared by physical port 1 is the largest, traffic that can be shared by physical port 2 is the second largest, and traffic that can be shared by the physical port 3 is the smallest.

Step 103: The controller sends a response packet to the Ethernet device, where the response packet carries the weight factor of each physical port.

Correspondingly, the Ethernet device receives the response packet carrying the weight factor of each physical port.

Step 104: When sending a packet through the logical port, the Ethernet device adjusts, based on the weight factor of each physical port, the traffic sent to each physical port.

For example, after data arrives at the logical port, the Ethernet device adjusts, based on the weight factor of each physical port of the logical port, the traffic sent to each physical port. The foregoing examples in steps 101 and 102 are still used. Assuming that an amount of a new data flow is 6 M. After the data flow arrives at a switch 2, it is determined, by using a hash algorithm, that the new data flow is forwarded through the physical port 3. However, the Ethernet device determines that the weight factor of the physical port 3 is 0.8, which is relatively small. If the data flow is sent through the physical port 3, packet loss occurs on the physical port 3 because the amount exceeds bandwidth. Therefore, the Ethernet device selects a physical port with the largest weight factor, namely, the physical port 1, to forward the new data flow.

In the traffic balancing method provided in this embodiment of the present invention, the Ethernet device sends the query packet carrying the load information of each physical port of the logical port of the Ethernet device to the controller. The controller receives the query packet, and determines the weight factor of each physical port of the logical port based on the load information of each physical port. The weight factor of each physical port is positively correlated with the amount of the traffic that is of the logical port and that can be shared by the physical port. Then, the controller sends the response packet carrying the weight factor of each physical port to the Ethernet device, so that the Ethernet device adjusts, based on the weight factor of each physical port, the traffic sent to each physical port. In this process, a user does not need to manually adjust a hash factor used in hash calculation. Instead, the Ethernet device automatically adjusts the traffic of each physical port. This does not affect currently transmitted service data and does not cause a service exception.

The following uses an example in which the logical port is the logical port 2, and the logical port 2 includes the physical port 1, the physical port 2, and the physical port 3 to describe in detail how the Ethernet device adjusts the traffic sent to each physical port when the packet is sent through the logical port in the foregoing embodiment.

For example, a hash factor is preset on each Ethernet device, and the hash factor may be one or more of information such as a source MAC address, a destination MAC address, a source IP address, a destination IP address, a source port number, and a destination port number of the packet. That the hash factor is the source MAC address, and the last three bits of the source MAC address are mapped to different physical ports by using the hash algorithm is used as an example. For example, 000, 001, and 010 are mapped to the physical port 1, 011 and 100 are mapped to the physical port 2, and 101 and 111 are mapped to the physical port 3. When sending the packet through the logical port, the Ethernet device adjusts, based on the preset hash factor and the weight factor of each physical port, the traffic sent to each physical port.

In a feasible design, in addition to the preset hash factor, a minimum weight factor is further configured for the Ethernet device. When the packet needs to be sent through the logical port 2, the Ethernet device determines a physical port based on the preset hash factor, and then the Ethernet device determines whether a weight factor of the physical port is greater than the minimum weight factor. If the weight factor of the physical port is greater than the minimum weight factor, the Ethernet device forwards the packet through the physical port. If the weight factor of the physical port is less than or equal to the minimum weight factor, the Ethernet device forwards the packet through another physical port. For example, the weight factors of the physical port 1, the physical port 2, and the physical port 3 are respectively 3.8, 1.9, and 0.8, and the minimum weight factor is 1. If the physical port determined by the Ethernet device based on the hash algorithm is the physical port 3, because the weight factor of the physical port 3 is less than the minimum weight factor, the Ethernet device selects one physical port from the physical port 1 and the physical port 2 to send the packet. For example, the one physical port is randomly selected from the physical port 1 and the physical port 2 to send the packet. For another example, the physical port with a larger weight factor, namely, the physical port 1, is selected from the physical port 1 and the physical port 2 to send the packet.

In another feasible design, in addition to the preset hash factor, a weight factor difference threshold is further configured for the Ethernet device. When the packet needs to be sent through the logical port 2, the Ethernet device determines the physical port based on the preset hash factor, and then the Ethernet device determines whether a difference between the weight factor of the physical port and the maximum weight factor is greater than or equal to the weight factor difference threshold. If the difference is greater than or equal to the weight factor difference threshold, the Ethernet device sends the packet through another physical port. If the difference is less than the weight factor difference threshold, the Ethernet device sends the packet through the physical port calculated through the hash algorithm. For example, the weight factors of the physical port 1, the physical port 2, and the physical port 3 are respectively 3.8, 1.9, and 0.8, and the weight factor difference threshold is 2. If the physical port determined by the Ethernet device based on the hash algorithm is the physical port 3, because a difference between the weight factor of the physical port 3 and the maximum weight factor, namely, the weight factor of the physical port 1, is equal to 3, and the difference is greater than the weight factor difference threshold 2, the Ethernet device selects the one physical port from the physical port 1 and the physical port 2 to send the packet. For example, the one physical port is randomly selected from the physical port 1 and the physical port 2 to send the packet. For another example, the physical port with maximum larger weight factor, namely, the physical port 1, is selected from the physical port 1 and the physical port 2 to send the packet.

In this embodiment, the Ethernet device determines, based on the preset hash factor, the physical port used to forward the packet, and then determines, based on the weight factor, whether the packet can be forwarded through the physical port determined based on the hash factor. The traffic sent to each physical port can be adjusted without modifying the hash factor. The adjustment process is simple and does not affect services.

In the foregoing embodiment, for a determined service, a source MAC address, a destination MAC address, and the like of a packet of the service are fixed. Therefore, the traffic sent to each physical port can be adjusted based on the hash factor and the weight factor. However, the service is not fixed. If the service changes, for example, before the Ethernet device sends the query packet to the controller, 100 users are initiating the service, and after the Ethernet device receives the response packet sent by the controller, 1000 users are initiating the service. In this case, the traffic of each physical port of the logical port varies. It is clearly that the weight factor carried in the response packet cannot meet a traffic balancing requirement. To avoid this phenomenon, optionally, in this embodiment of this application, when sending the packet through the logical port, that the Ethernet device adjusts, based on the weight factor of each physical port, the traffic sent to each physical port includes: When sending the packet through the logical port, the Ethernet device determines whether the traffic of each physical port of the logical port varies. If the traffic of each physical port does not vary, the Ethernet device adjusts, based on the weight factor of each physical port, the traffic sent to each physical port.

For example, assuming that the Ethernet device has the logical port 2, and the logical port 2 includes the physical port 1, the physical port 2, and the physical port 3. Before the Ethernet device sends the packet to the controller, the 100 users are initiating the service, and currently consumed bandwidth of the physical port 1 is 40 M, accounting for 20% of the total bandwidth of physical port 1. Currently consumed bandwidth of the physical port 2 is 40 M, accounting for 40% of the total bandwidth of physical port 2. Currently consumed bandwidth of the physical port 3 is 47.5 M, accounting for 95% of the total bandwidth of the physical port 3. The controller determines, based on the query packet, that the weight factors of the physical port 1, the physical port 2, and the physical port 3 are respectively 3.8, 1.9, and 0.8, encapsulates the weight factors, a logical port identifier of the Ethernet device, and the like into the response packet, and sends the response packet to the Ethernet device. After receiving the response packet, the Ethernet device determines that the weight factors of the physical port 1, the physical port 2, and the physical port 3 are respectively 3.8, 1.9, and 0.8, and determines that percentage variation indicated by the load information of each physical port does not exceed a preset threshold. In other words, variation of the percentage of the consumed bandwidth of each physical port in the total bandwidth of the physical port does not exceed the preset threshold. For example, after the Ethernet device receives the response packet, the percentages of the consumed bandwidth of the physical port 1, the physical port 2, and the physical port 3 in the total bandwidth is still 20%, 40% and 95%, or although the percentage of the consumed bandwidth of each physical port in the total bandwidth varies, the variation is not significant, for example, from the original 20%, 40%, and 95% to 25%, 40%, and 95%, the Ethernet device adjusts, based on the weight factor of each physical port, the traffic sent to each physical port.

In this embodiment, the load information of each physical port is used to indicate the percentage of the consumed bandwidth of the physical port in the total bandwidth of the physical port. Before adjusting, based on the weight factor, the traffic sent to each physical port, the Ethernet device determines whether the percentage variation indicated by the load information of each physical port in the physical ports exceeds the preset threshold. Only in a case in which the percentage variation indicated by the load information of all the physical ports does not exceed the preset threshold, the Ethernet device adjusts, based on the weight factor, the traffic sent to each physical port. This avoids that the weight factor is not applicable when the percentage of the consumed bandwidth in the total bandwidth of the physical port greatly varies. In addition, the Ethernet device may only determine percentage variation indicated by load information of some physical ports. For example, in the query packet sent by the Ethernet device, the percentages of the consumed bandwidth of the physical port 1, the physical port 2, and the physical port 3 in the total bandwidth is respectively 20%, 40%, and 95%. After the Ethernet device receives the response packet, it is discovered that the weight factor of the physical port 1 is greater than that of the physical port 3, and the weight factor of the physical port 3 is the smallest. Therefore, the traffic of the physical port 3 should be increased. In this case, the Ethernet device mainly detects whether the percentage of the consumed bandwidth of the physical port 1 in the total bandwidth of the physical port 1 greatly varies. If the percentage varies from 20% to 30%, variation is 10%, which is 30% less than the preset threshold. Then, the Ethernet device adjusts, based on the weight factor carried in the response packet, the traffic sent to each physical port.

In the foregoing embodiment, if the percentage variation indicated by the load information of one or more physical ports exceeds the preset threshold, the Ethernet device determines whether the weight factor of each physical port is applicable to each physical port whose traffic varies. If the weight factor of each physical port is applicable to each physical port whose traffic varies, the Ethernet device adjusts, based on the weight factor of each physical port, the traffic sent to each physical port.

For example, if a percentage of consumed bandwidth of any of the one or more physical ports in total bandwidth greatly varies, for example, varies from the original 20%, 40%, and 95% to 80%, 40%, and 95%, the Ethernet device re-collects load information of each physical port, and sends the load information to the controller, so that the controller recalculates the weight factor.

The following describes in detail the query packet and the response packet in this embodiment of this application.

In this embodiment of this application, the query packet and the response packet may be User Datagram Protocol (UDP) packets. For example, FIG. 4 is a schematic diagram of a structure of a UDP packet in a traffic balancing method according to an embodiment of this application.

As shown in FIG. 4, the UDP packet includes an outer Ethernet header, an outer IP header, an outer UDP header, and a payload. The outer Ethernet header includes a destination MAC address (MAC DA), a source MAC address (MAC SA), a label, an Ethernet type, and the like. The outer IP header includes a protocol, a source IP address (IP SA), and a destination IP address (IP DA). The outer UDP header includes a source port number, a destination port (Dest port) number, a UDP length, and a UDP checksum.

In this embodiment of this application, the UDP packet used as a query packet has a fixed UDP port number. In other words, the source port number in the outer UDP header is fixed, which is for example, 6000. In this way, after a controller receives the UDP packet and parses the UDP packet, if the UDP port number of the UDP packet is 6000, the controller determines that the UDP packet is the query packet, and a weight factor needs to be calculated based on load information carried in the UDP packet. If the UDP port number of the UDP packet is not 6000, the weight factor does not need to be calculated. Similarly, after an Ethernet device receives the UDP packet and parses the packet, if the UDP port number of the UDP packet is 6000, the Ethernet device determines that the UDP packet is a response packet, and traffic sent to each physical port needs to be adjusted based on the weight factor carried in the UDP packet. If the UDP port number of the UDP packet is not 6000, the traffic of each physical port does not need to be adjusted.

In this embodiment of this application, when the UDP packet is the query packet, the payload of the UDP packet is used to store device information of the Ethernet device, load information of each physical port of a logical port, and the like. When the UDP packet is the response packet, the payload of the UDP packet is used to store the device information of the Ethernet device, a weight factor of each physical port of the logical port, and the like. The following describes the payload of the UDP packet in detail. For example, refer to Table 1.

Table 1 is a detailed content table of the payload of the UDP packet in this embodiment of this application.

**Table 1**

| Message main field | Query packet | Response packet |
|---|---|---|
| IP | IP 1 | IP 1 |
| Logical port identifier | 10 | 10 |
| Quantity of physical ports | 3 | 3 |
| Physical port 1 | 20% | 3.8 |
| Physical port 2 | 40% | 1.9 |
| Physical port 3 | 95% | 0.8 |

The following describes Table 1 in detail.

### (a) IP field.

In this embodiment of this application, the IP field indicates an IP address of the Ethernet device, namely, a network location of the Ethernet device, and is used to exchange a message between the Ethernet device and the controller. When an agent module is deployed on the Ethernet device, the IP address may also be referred to as an IP address of an agent. Assuming that the IP address of the Ethernet device is 10.1.1.1 and the IP address of the controller is 20.1.1.1, when the Ethernet device sends the query packet to the controller, the destination IP address (IP DA) in the outer IP header of the query packet is the IP address 20.1.1.1 of the controller. The source IP address (IP SA) in the outer IP header is the IP address 10.1.1.1 of the Ethernet device. The IP field in the payload of the query packet, namely, the IP 1 in Table 1, is the IP address 10.1.1.1 of the Ethernet device. After receiving the query packet, the controller parses the payload in the query packet, stores related information of the Ethernet device in a local database, and extracts the information as an input during calculation.

### (b) Logical port identifier, namely, an Eth-Trunk ID field.

In this embodiment of this application, the Eth-Trunk ID field includes a logical port number, ifindex data of the logical port, and the like. In payload data of the query packet sent by the Ethernet device to the controller, the Eth-trunk ID field may uniquely identify one logical port on the Ethernet device. After calculating the weight factor, the controller sends the response packet carrying the Eth-trunk ID to the Ethernet device, so that the Ethernet device determines a corresponding logical port based on the Eth-trunk ID.

### (c) Field of the quantity of physical ports, namely, a Member_Num field.

In this embodiment of this application, the Member_Num field the quantity of physical ports included in the logical port. After receiving the query packet, the controller determines the quantity of physical ports based on the Member_Num field, traverses all physical ports based on the quantity, and calculates the weight factor of each physical port based on the load information of each physical port.

### (d) Physical port field, namely, Member_N, where N indicates a physical port number.

In this embodiment of this application, if the UDP packet is the query packet, a value of the field indicates the load information of the physical port, and the load information is important data for the controller to calculate the weight factor. If the UDP packet is the response packet, the value of the field indicates the weight factor of the physical port, and is used to indicate the Ethernet device to adjust the traffic of each physical port based on the weight factor of each physical port.

The following describes in detail how the controller determines the weight factor of each physical port based on the load information of each physical port in the query packet after receiving the query packet.

In a feasible design, load information of one physical port is used to indicate a percentage of consumed bandwidth of the physical port in total bandwidth of the physical port, and that the controller determines the weight factor of each physical port based on the load information of each physical port includes: The controller determines a least common multiple of percentages of the plurality of physical ports based on the percentage of each physical port. The controller determines the weight factor of each physical port based on the least common multiple. The weight factor of one physical port = the least common multiple/the percentage of the physical port.

For example, the weight factor is denoted as weight, the percentage is recorded as OutUti, the least common multiple is denoted as X, and the logical port include physical ports 1 to N. In this case, (weight_1×OutUti_1): (weight_2×OutUti_2): (weight_3×OutUti_3): (weight_4×OutUti_4):...: (weight_N×OutUti_N)=1:1:1:... Therefore, weight_1, weight_2, weight_3, and weight_N can be determined by calculating the least common multiple X of OutUti_1, OutUti_2, OutUti_3, ..., and OutUti_N, where weight_N = X/OutUti_N. For example, in the foregoing Table 1, if the logical port identifier is 2, the field of the quantity of physical ports is 3, and physical port fields are respectively 20%, 40%, and 95%, it indicates that the logical port 2 includes the physical port 1, the physical port 2, and the physical port 3. Consumed bandwidth of the three physical ports is 20%, 40%, and 95% in total bandwidth thereof. The controller finds, based on 20%, 40%, and 95%, that the least common multiple X = 0.76, and then weight factors of the physical port 1, the physical port 2, and the physical port 3 are respectively 3.8, 1.9, and 0.8. After calculating the weight factor, the controller sends the response packet to the Ethernet device. Based on Table 1, the value of the physical port field in the response packet is the weight factor.

The following describes in detail an occasion in which the Ethernet device reports the load information of each physical port in this embodiment of this application. The occasion may also be considered as an occasion in which the controller determines the weight factor of each physical port of the logical port.

The Ethernet device according to the present invention specifically determines whether traffic of at least one physical port in the plurality of physical ports exceeds a preset threshold. If the traffic of the at least one physical port exceeds the preset threshold, the Ethernet device sends the query packet to the controller.

For example, the agent module is deployed on the Ethernet device. If a load of a specific logical port exceeds a limit, the Ethernet device notifies a user that uneven traffic allocation may occur. After detecting the event, the agent module actively collects the load information of each physical port of the logical port and reports the load information to the controller. For example, the Ethernet device pre-stores a bandwidth warning value, which is for example, 90%. In this case, if the percentage of the consumed bandwidth of the physical port in the total bandwidth of the physical port exceeds 90%, an alarm is reported to the user. The agent module senses the event, collects the load information of each physical port of the logical port, and reports the load information to the controller. For another example, a bandwidth warning value difference, which is for example, 10%, is pre-stored on the Ethernet device, and the agent module collects the load information of each logical port. If there are two physical ports, a difference between percentages of consumed bandwidth of the two physical ports is greater than 10%. In this case, the agent module sends the load information of each physical port to the controller. For example, the agent module finds that the percentages of the consumed bandwidth of the physical port 1, the physical port 2, and the physical port 3 of the logical port in the total bandwidth thereof are respectively 20%, 40%, and 60%. A difference between the percentages of the consumed bandwidth of the physical port 1 and the physical port 2 is greater than 10%, a difference between the percentages of the consumed bandwidth of the physical port 2 and the physical port 3 is greater than 10%, and a difference between the percentages of the consumed bandwidth of the physical ports 1 and the physical port 3 is greater than 10%. The agent module sends the load information of each physical port of the logical port to the controller.

In this embodiment, the Ethernet device actively reports the load information of each physical port of the logical port to the controller, so that the controller determines the weight factor based on the load information, and adjusts the traffic of each physical port without modifying a hash factor.

In another feasible design, that the Ethernet device sends the query packet to the controller includes: The Ethernet device sends the query packet to the controller for a plurality of times.

For example, the Ethernet device may periodically or aperiodically collect the load information of each physical port of the logical port, and report the load information to the controller in batches.

In this example, the Ethernet device periodically or aperiodically reports the load information of each physical port of the logical port to the controller, so that the controller determines the weight factor based on the load information, and adjusts the traffic of each physical port without modifying the hash factor.

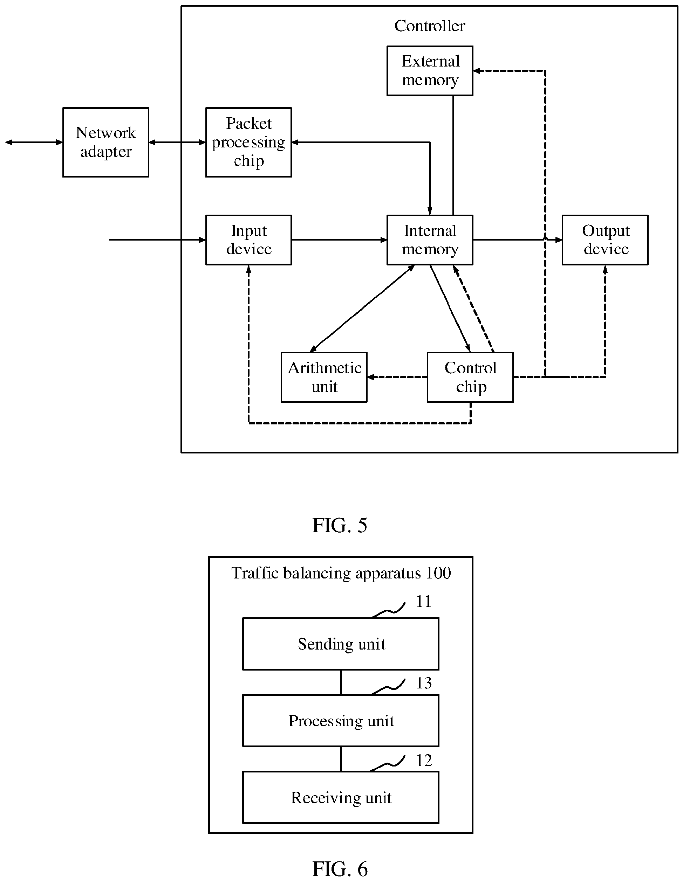

The following describes in detail the controller in the embodiments of this application. For example, FIG. 5 is a schematic diagram of a structure of a controller according to an embodiment of this application.

Refer to FIG. 5. The controller is connected to a network adapter. The controller includes a packet processing chip, an external memory, an internal memory, an input device, an output device, an arithmetic unit, a control chip, an output device, and the like. The query packet sent by the Ethernet device reaches the packet processing chip through the network adapter. The packet processing chip parses the query packet to obtain the IP address of the Ethernet device and the load information of each physical port of the logical port of the Ethernet device. The packet processing chip reports parsed information to the internal memory. The control chip periodically triggers the arithmetic logic unit to invoke information in the internal memory, performs calculation on the invoked information to obtain the weight factor of each physical port, and stores the weight factor of each physical port in the internal memory. The packet processing chip invokes the weight factor in the internal memory, encapsulates the weight factor in the response packet, and sends the response packet to the Ethernet device through the network adapter. The Ethernet device adjusts, based on the weight factor of each physical port, the traffic sent to each physical port.

FIG. 6 is a schematic diagram of a structure of a traffic balancing apparatus according to an embodiment of this application. The traffic balancing apparatus in this embodiment may be an Ethernet device, or may be a chip used in an Ethernet device. The traffic balancing apparatus may be configured to perform a function of the Ethernet device in the foregoing embodiment. As shown in FIG. 6, the traffic balancing apparatus 100 may include:
a sending unit 11, configured to send a query packet to a controller, where the query packet carries load information of each physical port in a plurality of physical ports of a logical port of the Ethernet device;
a receiving unit 12, configured to receive a response packet sent by the controller, where the response packet carries a weight factor of each physical port, and the weight factor of each physical port is positively correlated with an amount of traffic that is of the logical port and that can be shared by the physical port; and
a processing unit 13, configured to: when the sending unit 11 sends a packet through the logical port, adjust, based on the weight factor of each physical port, traffic sent to each physical port.

In a feasible design, the processing unit 13 is further configured to determine whether traffic of at least one physical port in the plurality of physical ports exceeds a preset threshold.

The sending unit 11 is configured to: if the processing unit 13 determines that the traffic of the at least one physical port exceeds the preset threshold, send the query packet to the controller.

According to the present invention, the load information of each physical port is used to indicate a percentage of consumed bandwidth of the physical port in total bandwidth of the physical port. The processing unit 13 is configured to determine whether the percentage indicated by the load information of each physical port of the logical port varies. If the percentage variation indicated by the load information of each physical port does not exceed a preset threshold, the processing unit 13 adjusts, based on the weight factor of each physical port, the traffic sent to each physical port.

The processing unit 13 is further configured to: If percentage variation indicated by the load information of each physical port exceeds the preset threshold, the Ethernet device re-collects load information of each physical port.

The sending unit 11 is further configured to send a query packet carrying the re-collected load information to the controller.

In a feasible design, the processing unit 13 is configured to adjust, based on a preset hash factor and the weight factor of each physical port, the traffic sent to each physical port.

The traffic balancing apparatus provided in this embodiment of this application may perform an action of the Ethernet device in the foregoing embodiment. An implementation principle and a technical effect of the traffic balancing apparatus are similar to those of the Ethernet device in the foregoing embodiment. Details are not described herein again.

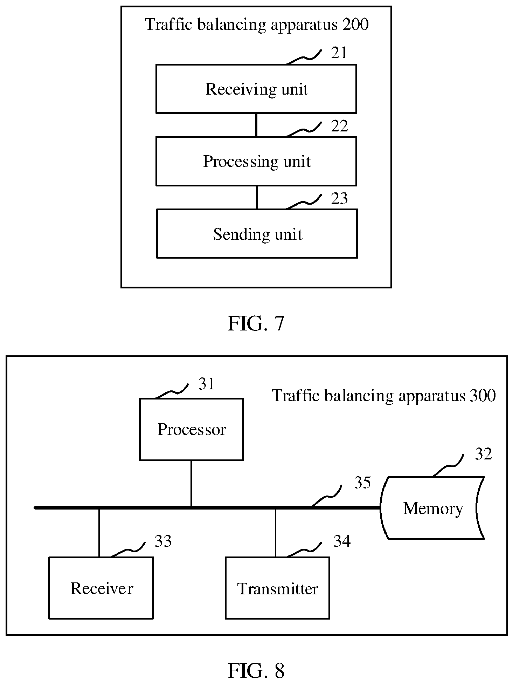

FIG. 7 is a schematic diagram of a structure of another traffic balancing apparatus according to an embodiment of this application. The traffic balancing apparatus in this embodiment may be a controller, or may be a chip used in a controller. The traffic balancing apparatus may be configured to perform a function of the controller in the foregoing embodiment. As shown in FIG. 7, the traffic balancing apparatus 200 may include:
a receiving unit 21, configured to receive a query packet sent by an Ethernet device, where the query packet carries load information of each physical port in a plurality of physical ports of a logical port of an Ethernet device;
a processing unit 22, configured to determine a weight factor of each physical port based on the load information of each physical port, where the weight factor of each physical port is positively correlated to an amount of traffic that is of the logical port and that can be shared by the physical port; and
a sending unit 23, configured to send a response packet to the Ethernet device, where the response packet carries the weight factor of each physical port.

In a feasible design, the load information of each physical port is used to indicate a percentage of consumed bandwidth of the physical port in total bandwidth of the physical port, and the processing unit 22 is configured to determine a least common multiple of percentages of the plurality of physical ports based on the percentage of each physical port. The processing unit 22 determines the weight factor of each physical port based on the least common multiple. The weight factor of one physical port = the least common multiple/the percentage of the physical port.

The traffic balancing apparatus provided in this embodiment of this application may perform an action of the controller in the foregoing embodiment. An implementation principle and a technical effect of the traffic balancing apparatus are similar to those of the controller in the foregoing embodiment. Details are not described herein again.

It should be noted that, the receiving unit may be a receiver in actual implementation, and the sending unit may be a transmitter in actual implementation. The processing unit may be implemented in a form of software invoked by a processing element. This may also be implemented in a form of hardware. For example, the processing unit may be a separately disposed processing element, or may be integrated into a chip of the foregoing apparatus for implementation. In addition, the processing unit may alternatively be stored in a memory of the foregoing apparatus in a form of program code, and is invoked by a processing element of the foregoing apparatus to perform a function of the processing unit. In addition, all or some of the units may be integrated together, or may be implemented independently. The processing element described herein may be an integrated circuit with a signal processing capability. In an implementation process, steps of the foregoing method or the foregoing units may be implemented by using an integrated logical circuit of hardware in the processor element, or by using an instruction in a form of software.

For example, the foregoing units may be configured as one or more integrated circuits configured to implement the foregoing method, for example, one or more application-specific integrated circuits (ASIC), or one or more microprocessors (digital signal processor, DSP), or one or more field-programmable gate arrays (FPGA). For another example, when one of the units is implemented in a form of scheduling program code by a processing element, the processing element may be a general-purpose processor, for example, a central processing unit (CPU) or another processor that can invoke the program code. For still another example, the units may be integrated and implemented in a form of a system-on-a-chip (SOC).

In addition, an embodiment of this application further provides a traffic balancing system. The system includes one or more traffic balancing apparatuses (which may be referred to as a first traffic balancing apparatus) shown in FIG. 6 and the traffic balancing apparatus (which may be referred to as a second traffic balancing apparatus) shown in FIG. 7. Because the apparatus shown in FIG. 6 is disposed on the Ethernet device, and the apparatus shown in FIG. 7 is disposed on the controller, in an implementation, the traffic balancing system may include a plurality of Ethernet devices and one controller.

FIG. 8 is a schematic diagram of a structure of still another traffic balancing apparatus according to an embodiment of this application. As shown in FIG. 8, the traffic balancing apparatus 300 may include a processor 31 (for example, a CPU), a memory 32, a receiver 33, and a transmitter 34. Both the receiver 33 and the transmitter 34 are coupled to the processor 31, the processor 31 controls a receiving action of the receiver 33, and the processor 31 controls a sending action of the transmitter 34. The memory 32 may include a high-speed random access memory (RAM), and may further include a non-volatile memory (NVM), for example, at least one magnetic disk memory. The memory 32 may store various instructions, to complete various processing functions and implement method steps of this application. Optionally, the traffic balancing apparatus in this application may further include a communications bus 35. The receiver 33 and the transmitter 34 may be integrated into a transceiver of the traffic balancing apparatus, or may be independent transceiver antennas on the traffic balancing apparatus. The communications bus 35 is configured to implement communication connection between elements.

In this embodiment of this application, the memory 32 is configured to store computer-executable program code, and the program code includes an instruction. When the processor 31 executes the instruction, the processor 31 of the traffic balancing apparatus is enabled to perform a processing action of the Ethernet device in the foregoing method embodiments, the receiver 33 is enabled to perform a receiving action of the Ethernet device in the foregoing method embodiments, and the transmitter 34 is enabled to perform a sending action of the Ethernet device in the foregoing method embodiments. Implementation principles and technical effects of the processor 31, the receiver 33, and the transmitter 34 are similar to those of the processing action, the receiving action, and the sending action. Details are not described herein again.

In another embodiment of this application, the memory 32 is configured to store computer-executable program code, and the program code includes an instruction. When the processor 31 executes the instruction, the processor 31 of the traffic balancing apparatus is enabled to perform a processing action of the controller in the foregoing method embodiments, the receiver 33 is enabled to perform a receiving action of the controller in the foregoing method embodiments, and the transmitter 34 is enabled to perform a sending action of the controller in the foregoing method embodiments. Implementation principles and technical effects of the processor 31, the receiver 33, and the transmitter 34 are similar to those of the processing action, the receiving action, and the sending action. Details are not described herein again.

An embodiment of this application further provides a storage medium. The storage medium stores a computer-executable instruction, and when the computer-executable instruction is executed by a processor, the processor is configured to implement the foregoing traffic balancing method.

An embodiment of the present invention further provides a computer program product. When the computer program product runs on an Ethernet device, the Ethernet device is enabled to perform the foregoing traffic balancing method.

An embodiment of the present invention further provides a computer program product. When the computer program product runs on a controller, the controller is enabled to perform the foregoing traffic balancing method.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive SSD), or the like.

"A plurality of' in this application refers to two or more than two. The term "and/or" in this specification is only an association relationship for describing associated objects and represents that there may be three relationships. For example, A and/or B may represent the following three cases: Only A exists, both A and B exist, and only B exists. In addition, the description manner "at least one of..." in this specification indicates one of listed items or any combination thereof. For example, "at least one of A, B, and C" may indicate the following six cases: Only A exists, only B exists, only C exists, and both A and B exist, both B and C exist, both A and C exist, and A, B, and C all exist. In addition, the character "/" in this specification usually indicates an "or" relationship between the associated objects. In a formula, the character "/" indicates a "division" relationship between associated objects.

It may be understood that numerical symbols involved in the embodiments of this application are differentiated merely for ease of description, but are not used to limit the scope of the embodiments of this application.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

## Claims

1. A traffic balancing method, comprising:
sending (101), by an Ethernet device, a query packet to a controller, wherein the query packet carries load information of each physical port in a plurality of physical ports of a logical port of the Ethernet device;
receiving (103), by the Ethernet device, a response packet sent by the controller, wherein the response packet carries a weight factor of each physical port, and the weight factor of each physical port is positively correlated with an amount of traffic that is of the logical port and that can be shared by the physical port; and
when sending a packet through the logical port, adjusting (104), by the Ethernet device based on the weight factor of each physical port, traffic sent to each physical port;
**characterized in that**
the load information of each physical port is used to indicate a percentage of consumed bandwidth of the physical port in total bandwidth of the physical port, and the adjusting, by the Ethernet device based on the weight factor of each physical port, traffic sent to each physical port comprises:
determining, by the Ethernet device, whether the percentage indicated by the load information of each physical port of the logical port varies;
if percentage variation indicated by the load information of each physical port does not exceed a second preset threshold, adjusting, by the Ethernet device based on the weight factor of each physical port, the traffic sent to each physical port, and
if the percentage variation indicated by the load information of each physical port exceeds the second preset threshold, re-collecting, by the Ethernet device, load information of each physical port; and
sending, by the Ethernet device, a query packet carrying the re-collected load information to the controller.

2. The method according to claim 1, wherein the sending, by an Ethernet device, a query packet to a controller comprises:
determining, by the Ethernet device, whether traffic of at least one physical port in the plurality of physical ports exceeds a first preset threshold; and
if the traffic of the at least one physical port exceeds the first preset threshold, sending, by the Ethernet device, the query packet to the controller.

3. The method according to claim 1, wherein if percentage variation indicated by the load information of each physical port does not exceed the second preset threshold, the adjusting, by the Ethernet device based on the weight factor of each physical port, traffic sent to each physical port comprises:
adjusting, by the Ethernet device based on a preset hash factor and the weight factor of each physical port, the traffic sent to each physical port.

4. A traffic balancing method, comprising:
receiving (101), by a controller, a query packet sent by an Ethernet device, wherein the query packet carries load information of each physical port in a plurality of physical ports of a logical port of the Ethernet device;
determining (102), by the controller based on the load information of each physical port, a weight factor of each physical port, wherein the weight factor of each physical port is positively correlated with an amount of traffic that is of the logical port and that can be shared by the physical port; and
sending (103), by the controller, a response packet to the Ethernet device, wherein the response packet carries the weight factor of each physical port;
**characterized in that** the load information of each physical port is used to indicate a percentage of consumed bandwidth of the physical port in total bandwidth of the physical port, and the determining, by the controller based on the load information of each physical port, a weight factor of each physical port comprises:
determining, by the controller based on the percentage of each physical port, a least common multiple of percentages of the plurality of physical ports; and
determining, by the controller based on the least common multiple, the weight factor of each physical port, wherein the weight factor of one physical port = the least common multiple/the percentage of the physical port, wherein the method further comprises
receiving, by the controller, a query packet carrying re-collected load information when a percentage variation indicated by the load information of each physical port exceeds a second preset threshold.

5. A load balancing apparatus (100), comprising:
a sending unit (11), configured to send a query packet to a controller, wherein the query packet carries load information of each physical port in a plurality of physical ports of a logical port of an Ethernet device;
a receiving unit (12), configured to receive a response packet sent by the controller, wherein the response packet carries a weight factor of each physical port, and the weight factor of each physical port is positively correlated with an amount of traffic that is of the logical port and that can be shared by the physical port; and
a processing unit (13), configured to: when the sending unit sends a packet through the logical port, adjust, based on the weight factor of each physical port, traffic sent to each physical port;
**characterized in that**
the load information of each physical port is used to indicate a percentage of consumed bandwidth of the physical port in total bandwidth of the physical port, and
the processing unit is configured to: determine whether the percentage indicated by the load information of each physical port of the logical port varies; and
if percentage variation indicated by the load information of each physical port does not exceed a second preset threshold, adjust, based on the weight factor of each physical port, the traffic sent to each physical port; and
if the percentage variation indicated by the load information of each physical port exceeds the second preset threshold, re-collect load information of each physical port; and
the sending unit is further configured to send, to the controller, a query packet carrying the re-collected load information.

6. The apparatus according to claim 5, wherein
the processing unit is further configured to determine whether traffic of at least one physical port in the plurality of physical ports exceeds a first preset threshold; and
the sending unit (11) is configured to: if the processing unit determines that the traffic of the at least one physical port exceeds the first preset threshold, send the query packet to the controller.

7. The apparatus according to claim 6, wherein
if percentage variation indicated by the load information of each physical port does not exceed a second preset threshold, the processing unit (13) is configured to adjust, based on a preset hash factor and the weight factor of each physical port, the traffic sent to each physical port.

8. A traffic balancing apparatus (200), comprising:
a receiving unit (21), configured to receive a query packet sent by an Ethernet device, wherein the query packet carries load information of each physical port in a plurality of physical ports of a logical port of the Ethernet device;
a processing unit (22), configured to determine, based on the load information of each physical port, a weight factor of each physical port, wherein the weight factor of each physical port is positively correlated to an amount of traffic that is of the logical port and that can be shared by the physical port; and
a sending unit (23), configured to send a response packet to the Ethernet device, wherein the response packet carries the weight factor of each physical port;
characterized in thatthe load information of each physical port is used to indicate a percentage of consumed bandwidth of the physical port in total bandwidth of the physical port;
the processing unit (22) is configured to determine, based on the percentage of each physical port, a least common multiple of percentages of the plurality of physical ports; and determine, based on the least common multiple, the weight factor of each physical port, wherein the weight factor of one physical port = the least common multiple/a percentage of the physical port; and
the receiving unit (21) is configured to receive a query packet carrying re-collected load information when a percentage variation indicated by the load information of each physical port exceeds a second preset threshold.

9. A traffic balancing system, comprising a first traffic balancing apparatus and a second traffic balancing apparatus, wherein the first traffic balancing apparatus is the traffic balancing apparatus according to any one of claims 5 to 7, and the second traffic balancing apparatus is the traffic balancing apparatus according to claim 8.

## Patentansprüche

1. Verkehrsausgleichsverfahren, das Folgendes umfasst:
Senden (101), durch eine Ethernet-Vorrichtung, eines Abfragepakets an eine Steuereinheit, wobei das Abfragepaket Lastinformationen jedes physikalischen Anschlusses in mehreren physikalischen Anschlüssen eines logischen Anschlusses der Ethernet-Vorrichtung führt;
Empfangen (103), durch die Ethernet-Vorrichtung, eines durch die Steuereinheit gesendeten Antwortpakets, wobei das Antwortpaket einen Gewichtungsfaktor jedes physikalischen Anschlusses führt und der Gewichtungsfaktor jedes physikalischen Anschlusses positiv mit einer Verkehrsmenge, die zu dem logischen Anschluss gehört und die durch den physikalischen Anschluss gemeinsam verwendet werden kann, korreliert ist; und
beim Senden des Pakets durch den logischen Anschluss, Anpassen (104), durch die Ethernet-Vorrichtung basierend auf dem Gewichtungsfaktor jedes physikalischen Anschlusses, des Verkehrs, der zu jedem physikalischen Anschluss gesendet wird;
**dadurch gekennzeichnet, dass**
die Lastinformationen jedes physikalischen Anschlusses verwendet werden, um einen prozentualen Anteil der verbrauchten Bandbreite des physikalischen Anschlusses in der gesamten Bandbreite des physikalischen Anschlusses anzugeben, und das Anpassen, durch die Ethernet-Vorrichtung basierend auf dem Gewichtungsfaktor jedes physikalischen Anschlusses, des Verkehrs, der zu jedem physikalischen Anschluss gesendet wird, Folgendes umfasst:
Bestimmen, durch die Ethernet-Vorrichtung, ob der durch die Lastinformationen angegebene prozentuale Anteil jedes physikalischen Anschlusses des logischen Anschlusses variiert;
falls die durch die Lastinformationen angegebene Variation des prozentualen Anteils jedes physikalischen Anschlusses einen zweiten voreingestellten Schwellenwert nicht übersteigt, Anpassen, durch die Ethernet-Vorrichtung basierend auf dem Gewichtungsfaktor jedes physikalischen Anschlusses, des an jeden physikalischen Anschluss gesendeten Verkehrs, und
falls die durch die Lastinformationen angegebene Variation des prozentualen Anteils jedes physikalischen Anschlusses den zweiten voreingestellten Schwellenwert übersteigt, erneutes Erfassen, durch die Ethernet-Vorrichtung, von Lastinformationen jedes physikalischen Anschlusses; und
Senden, durch die Ethernet-Vorrichtung, eines Abfragepakets, das die neu erfassten Lastinformationen enthält, an die Steuereinheit.

2. Verfahren nach Anspruch 1, wobei das Senden, durch die Ethernet-Vorrichtung, eines Abfragepakets an eine Steuereinheit Folgendes umfasst:
Bestimmen, durch die Ethernet-Vorrichtung, ob Verkehr wenigstens eines physikalischen Anschlusses unter den mehreren physikalischen Anschlüssen einen ersten voreingestellten Schwellenwert übersteigt; und
falls der Verkehr des wenigstens einen physikalischen Anschlusses den ersten voreingestellten Schwellenwert übersteigt, Senden, durch die Ethernet-Vorrichtung, des Abfragepakets an die Steuereinheit.

3. Verfahren nach Anspruch 1, wobei dann, wenn die durch die Lastinformationen angegebene Variation des prozentualen Anteils jedes physikalischen Anschlusses den zweiten voreingestellten Schwellenwert nicht übersteigt, das Anpassen, durch die Ethernet-Vorrichtung basierend auf dem Gewichtungsfaktor jedes physikalischen Anschlusses, des an jeden physikalischen Anschluss gesendeten Verkehrs Folgendes umfasst:
Anpassen, durch die Ethernet-Vorrichtung basierend auf einem voreingestellten Hash-Faktor und dem Gewichtungsfaktor jedes physikalischen Anschlusses, des an den physikalischen Anschluss gesendeten Verkehrs.

4. Verkehrsausgleichsverfahren, das Folgendes umfasst:
Empfangen (101), durch eine Steuereinheit, eines durch eine Ethernet-Vorrichtung gesendeten Abfragepakets, wobei das Abfragepaket Lastinformationen jedes physikalischen Anschlusses in mehreren physikalischen Anschlüssen eines logischen Anschlusses der Ethernet-Vorrichtung führt;
Bestimmen (102), durch die Steuereinheit basierend auf den Lastinformationen jedes physikalischen Anschlusses, eines Gewichtungsfaktors jedes physikalischen Anschlusses, wobei der Gewichtungsfaktor jedes physikalischen Anschlusses mit einer Verkehrsmenge, die zu dem logischen Anschluss gehört und von den physikalischen Anschlüssen gemeinsam verwendet werden kann, positiv korreliert ist; und
Senden (103), durch die Steuereinheit, eines Antwortpakets an die Ethernet-Vorrichtung, wobei das Antwortpaket den Gewichtungsfaktor jedes physikalischen Anschlusses führt;
**dadurch gekennzeichnet, dass** die Lastinformationen jedes physikalischen Anschlusses verwendet werden, um einen prozentualen Anteil der verbrauchten Bandbreite des physikalischen Anschlusses in der gesamten Bandbreite des physikalischen Anschlusses anzugeben, und das Bestimmen, durch die Steuereinheit basierend auf den Lastinformationen jedes physikalischen Anschlusses, eines Gewichtungsfaktors jedes physikalischen Anschlusses Folgendes umfasst:
Bestimmen, durch die Steuereinheit basierend auf dem prozentualen Anteil jedes physikalischen Anschlusses, eines kleinsten gemeinsamen Vielfachen der prozentualen Anteile der mehreren physikalischen Anschlüsse; und
Bestimmen, durch die Steuereinheit basierend auf dem kleinsten gemeinsamen Vielfachen, des Gewichtungsfaktors jedes physikalischen Anschlusses, wobei der Gewichtungsfaktor des physikalischen Anschlusses = kleinstes gemeinsames Vielfaches / prozentualer Anteil des physischen Anschlusses ist, wobei das Verfahren ferner Folgendes umfasst:
Empfangen, durch die Steuereinheit, eines Abfragepakets, das die neu erfassten Lastinformationen führt, wenn eine durch die Lastinformationen angegebene Variation des prozentualen Anteils jedes physikalischen Anschlusses einen zweiten voreingestellten Schwellenwert übersteigt.

5. Lastausgleichseinrichtung (100), die Folgendes umfasst:
eine Sendeeinheit (11), die konfiguriert ist, ein Abfragepaket an eine Steuereinheit zu senden, wobei das Abfragepaket Lastinformationen jedes physikalischen Anschlusses in mehreren physikalischen Anschlüssen eines logischen Anschlusses der Ethernet-Vorrichtung führt;
eine Empfangseinheit (12), die konfiguriert ist, ein durch die Steuereinheit gesendetes Antwortpaket zu empfangen, wobei das Antwortpaket einen Gewichtungsfaktor jedes physikalischen Anschlusses führt und der Gewichtungsfaktor jedes physikalischen Anschlusses mit einer Verkehrsmenge, die zu dem logischen Anschluss gehört und die durch den physikalischen Anschluss gemeinsam verwendet werden kann, positiv korreliert ist; und
eine Verarbeitungseinheit (13), die zu Folgendem konfiguriert ist: wenn die Sendeeinheit ein Paket über den logischen Anschluss sendet, Anpassen, basierend auf dem Gewichtungsfaktor jedes physikalischen Anschlusses, des zu jedem physikalischen Anschluss gesendeten Verkehrs;
**dadurch gekennzeichnet, dass**
die Lastinformationen jedes physikalischen Anschlusses verwendet werden, um einen prozentualen Anteil der verbrauchten Bandbreite des physikalischen Anschlusses in der gesamten Bandbreite des physikalischen Anschlusses anzugeben, und
die Verarbeitungseinheit konfiguriert ist zum: Bestimmen, ob der durch die Lastinformationen angegebene prozentuale Anteil jedes physikalischen Anschlusses des logischen Anschlusses variiert; und
falls die durch die Lastinformationen angegebene Variation des prozentualen Anteils jedes physikalischen Anschlusses einen zweiten voreingestellten Schwellenwert nicht übersteigt, Anpassen, basierend auf dem Gewichtungsfaktor jedes physikalischen Anschlusses, des zu jedem physikalischen Anschluss gesendeten Verkehrs; und
falls die durch die Lastinformationen angegebene Variation des prozentualen Anteils jedes physikalischen Anschlusses den zweiten voreingestellten Schwellenwert übersteigt, erneutes Erfassen von Lastinformationen jedes physikalischen Anschlusses; und
die Sendeeinheit ferner konfiguriert ist, ein Abfragepaket, das die neu erfassten Lastinformationen führt, an die Steuereinheit zu senden.

6. Einrichtung nach Anspruch 5, wobei
die Verarbeitungseinheit ferner konfiguriert ist, zu bestimmen, ob der Verkehr wenigstens eines physikalischen Anschlusses der mehreren physikalischen Anschlüsse einen ersten voreingestellten Schwellenwert übersteigt; und
die Sendeeinheit (11) konfiguriert ist, dann, wenn die Verarbeitungseinheit bestimmt, dass der Verkehr des wenigstens einen physikalischen Anschlusses den ersten voreingestellt Schwellenwert übersteigt, das Abfragepaket an die Steuereinheit zu senden.

7. Einrichtung nach Anspruch 6, wobei
falls die durch die Lastinformationen jedes physikalischen Anschlusses angegebene Variation des prozentualen Anteils einen zweiten voreingestellten Schwellenwert nicht übersteigt, die Verarbeitungseinheit (13) konfiguriert ist, basierend auf einem voreingestellten Hash-Faktor und dem Gewichtungsfaktor jedes physikalischen Anschlusses, den an jeden physischen Anschluss gesendeten Verkehr anzupassen.

8. Verkehrsausgleichseinrichtung (200), die Folgendes umfasst:
eine Empfangseinheit (21), die konfiguriert ist, ein durch eine Ethernet-Vorrichtung gesendetes Abfragepaket zu empfangen, wobei das Abfragepaket Lastinformationen jedes physikalischen Anschlusses in mehreren physikalischen Anschlüssen eines logischen Anschlusses der Ethernet-Vorrichtung führt;
eine Verarbeitungseinheit (22), die konfiguriert ist, basierend auf den Lastinformationen jedes physikalischen Anschlusses einen Gewichtungsfaktor jedes physikalischen Anschlusses zu bestimmen, wobei der Gewichtungsfaktor jedes physikalischen Anschlusses mit einer Verkehrsmenge, die zu dem logischen Anschluss gehört und von dem physikalischen Anschluss gemeinsam verwendet werden kann, positiv korreliert ist; und
eine Sendeeinheit (23), die konfiguriert ist, ein Antwortpaket an die Ethernet-Vorrichtung zu senden, wobei das Antwortpaket den Gewichtungsfaktor jedes physikalischen Anschlusses führt;
**dadurch gekennzeichnet, dass** die Lastinformationen jedes physikalischen Anschlusses verwendet werden, um einen prozentualen Anteil der verbrauchten Bandbreite des physikalischen Anschlusses in der gesamten Bandbreite des physikalischen Anschlusses anzugeben;
wobei die Verarbeitungseinheit (22) konfiguriert ist, basierend auf dem prozentualen Anteil jedes physikalischen Anschlusses, ein kleinstes gemeinsames Vielfaches der prozentualen Anteile der mehreren physikalischen Anschlüsse zu bestimmen; und,
basierend auf dem kleinsten gemeinsamen Vielfachen, den Gewichtungsfaktor jedes physikalischen Anschlusses zu bestimmen, wobei der Gewichtungsfaktor eines physischen Anschlusses = kleinstes gemeinsames Vielfaches / prozentualer Anteil des physikalischen Anschlusses ist; und
die Empfangseinheit (21) konfiguriert ist, ein Abfragepaket, das die neu erfassten Lastinformationen führt, zu empfangen, wenn eine durch die Lastinformationen angegebene Variation des prozentualen Anteils jedes physikalischen Anschlusses einen zweiten voreingestellten Schwellenwert übersteigt.

9. Verkehrsausgleichssystem, das eine erste Verkehrsausgleichseinrichtung und eine zweite Verkehrsausgleichseinrichtung umfasst, wobei die erste Verkehrsausgleichseinrichtung die Verkehrsausgleichseinrichtung nach einem der Ansprüche 5 bis 7 ist und die zweite Verkehrsausgleichseinrichtung die Verkehrsausgleichseinrichtung nach Anspruch 8 ist.

## Revendications

1. Procédé d'équilibrage de trafic, comprenant :
l'envoi (101), par un dispositif Ethernet, d'un paquet de requête à un contrôleur, dans lequel le paquet de requête transporte des informations de charge de chaque port physique dans une pluralité de ports physiques d'un port logique du dispositif Ethernet ;
la réception (103), par le dispositif Ethernet, d'un paquet de réponse envoyé par le contrôleur, dans lequel le paquet de réponse transporte un facteur de pondération de chaque port physique, et le facteur de pondération de chaque port physique est positivement corrélé avec une quantité de trafic qui est du port logique et qui peut être partagé par le port physique ; et
lors de l'envoi d'un paquet via le port logique, l'ajustement (104), par le dispositif Ethernet en fonction du facteur de pondération de chaque port physique, du trafic envoyé à chaque port physique ;
**caractérisé en ce que**
les informations de charge de chaque port physique sont utilisées pour indiquer un pourcentage de bande passante consommée du port physique dans la bande passante totale du port physique, et l'ajustement, par le dispositif Ethernet en fonction du facteur de pondération de chaque port physique, du trafic envoyé à chaque port physique comprend :
la détermination, par le dispositif Ethernet, si le pourcentage indiqué par les informations de charge de chaque port physique du port logique varie ;
si la variation de pourcentage indiquée par les informations de charge de chaque port physique ne dépasse pas un deuxième seuil prédéfini, l'ajustement, par le dispositif Ethernet en fonction du facteur de pondération de chaque port physique, du trafic envoyé à chaque port physique, et
si la variation de pourcentage indiquée par les informations de charge de chaque port physique dépasse le deuxième seuil prédéfini, la re-collecte, par le dispositif Ethernet, d'informations de charge de chaque port physique ; et
l'envoi, par le dispositif Ethernet, d'un paquet de requête transportant les informations de charge re-collectées au contrôleur.

2. Procédé selon la revendication 1, dans lequel l'envoi, par un dispositif Ethernet, d'un paquet de requête à un contrôleur comprend :
la détermination, par le dispositif Ethernet, si le trafic d'au moins un port physique dans la pluralité de ports physiques dépasse un premier seuil prédéfini ; et
si le trafic de l'au moins un port physique dépasse le premier seuil prédéfini, l'envoi, par le dispositif Ethernet, du paquet de requête au contrôleur.

3. Procédé selon la revendication 1, dans lequel si la variation de pourcentage indiquée par les informations de charge de chaque port physique ne dépasse pas le deuxième seuil prédéfini, l'ajustement, par le dispositif Ethernet en fonction du facteur de pondération de chaque port physique, du trafic envoyé à chaque port physique comprend :
l'ajustement, par le dispositif Ethernet en fonction d'un facteur de hachage prédéfini et du facteur de pondération de chaque port physique, du trafic envoyé à chaque port physique.

4. Procédé d'équilibrage de trafic, comprenant :
la réception (101), par un contrôleur, d'un paquet de requête envoyé par un dispositif Ethernet, le paquet de requête transportant des informations de charge de chaque port physique dans une pluralité de ports physiques d'un port logique du dispositif Ethernet ;
la détermination (102), par le contrôleur en fonction des informations de charge de chaque port physique, d'un facteur de pondération de chaque port physique, dans lequel le facteur de pondération de chaque port physique est positivement corrélé avec une quantité de trafic qui est du port logique et qui peut être partagé par le port physique ; et
l'envoi (103), par le contrôleur, d'un paquet de réponse au dispositif Ethernet, le paquet de réponse transportant le facteur de pondération de chaque port physique ;
**caractérisé en ce que** les informations de charge de chaque port physique sont utilisées pour indiquer un pourcentage de bande passante consommée du port physique dans la bande passante totale du port physique, et la détermination, par le contrôleur en fonction des informations de charge de chaque port physique, d'un facteur de pondération de chaque port physique comprend :
la détermination, par le contrôleur en fonction du pourcentage de chaque port physique, d'un plus petit commun multiple de pourcentages de la pluralité de ports physiques ; et
la détermination, par le contrôleur en fonction du plus petit commun multiple, du facteur de pondération de chaque port physique, dans lequel le facteur de pondération d'un port physique = le plus petit commun multiple/le pourcentage du port physique,
le procédé comprenant en outre
la réception, par le contrôleur, d'un paquet de requête transportant des informations de charge re-collectées lorsqu'une variation de pourcentage indiquée par les informations de charge de chaque port physique dépasse un deuxième seuil prédéfini.

5. Appareil d'équilibrage de charge (100), comprenant :
une unité d'envoi (11), configurée pour envoyer un paquet de requête à un contrôleur,
dans lequel le paquet de requête transporte des informations de charge de chaque port physique dans une pluralité de ports physiques d'un port logique d'un dispositif Ethernet ;
une unité de réception (12), configurée pour recevoir un paquet de réponse envoyé par le contrôleur, dans lequel le paquet de réponse transporte un facteur de pondération de chaque port physique, et le facteur de pondération de chaque port physique est positivement corrélé avec une quantité de trafic qui est du port logique et qui peut être partagé par le port physique ; et
une unité de traitement (13), configurée pour : lorsque l'unité d'envoi envoie un paquet via le port logique, ajuster, en fonction du facteur de pondération de chaque port physique, le trafic envoyé à chaque port physique ;
**caractérisé en ce que**
les informations de charge de chaque port physique sont utilisées pour indiquer un pourcentage de bande passante consommée du port physique dans la bande passante totale du port physique, et
l'unité de traitement est configurée pour : déterminer si le pourcentage indiqué par les informations de charge de chaque port physique du port logique varie ; et
si la variation de pourcentage indiquée par les informations de charge de chaque port physique ne dépasse pas un deuxième seuil prédéfini, ajuster, en fonction du facteur de pondération de chaque port physique, le trafic envoyé à chaque port physique ; et
si la variation de pourcentage indiquée par les informations de charge de chaque port physique dépasse le deuxième seuil prédéfini, re-collecter des informations de charge de chaque port physique ; et
l'unité d'envoi est en outre configurée pour envoyer, au contrôleur, un paquet de requête transportant les informations de charge re-collectées.

6. Appareil selon la revendication 5, dans lequel
l'unité de traitement est en outre configurée pour déterminer si le trafic d'au moins un port physique dans la pluralité de ports physiques dépasse un premier seuil prédéfini ; et
l'unité d'envoi (11) est configurée pour : si l'unité de traitement détermine que le trafic de l'au moins un port physique dépasse le premier seuil prédéfini, envoyer le paquet de requête au contrôleur.

7. Appareil selon la revendication 6, dans lequel
si la variation de pourcentage indiquée par les informations de charge de chaque port physique ne dépasse pas un deuxième seuil prédéfini, l'unité de traitement (13) est configurée pour ajuster, en fonction d'un facteur de hachage prédéfini et du facteur de pondération de chaque port physique, le trafic envoyé à chaque port physique.

8. Appareil d'équilibrage de trafic (200), comprenant :
une unité de réception (21), configurée pour recevoir un paquet de requête envoyé par un dispositif Ethernet, dans lequel le paquet de requête transporte des informations de charge de chaque port physique dans une pluralité de ports physiques d'un port logique du dispositif Ethernet ;
une unité de traitement (22), configurée pour déterminer, en fonction des informations de charge de chaque port physique, un facteur de pondération de chaque port physique, dans lequel le facteur de pondération de chaque port physique est positivement corrélé à une quantité de trafic qui est du port logique et qui peut être partagé par le port physique ; et
une unité d'envoi (23), configurée pour envoyer un paquet de réponse au dispositif Ethernet, dans lequel le paquet de réponse transporte le facteur de pondération de chaque port physique ;
**caractérisé en ce que** les informations de charge de chaque port physique sont utilisées pour indiquer un pourcentage de bande passante consommée du port physique dans la bande passante totale du port physique ;
l'unité de traitement (22) est configurée pour déterminer, en fonction du pourcentage de chaque port physique, un plus petit commun multiple de pourcentages de la pluralité de ports physiques ; et déterminer, en fonction du plus petit commun multiple, le facteur de pondération de chaque port physique, dans lequel le facteur de pondération d'un port physique = le plus petit commun multiple/un pourcentage du port physique ; et
l'unité de réception (21) est configurée pour recevoir un paquet de requête transportant des informations de charge re-collectées lorsqu'une variation de pourcentage indiquée par les informations de charge de chaque port physique dépasse un deuxième seuil prédéfini.

9. Système d'équilibrage de trafic, comprenant un premier appareil d'équilibrage de trafic et un deuxième appareil d'équilibrage de trafic, dans lequel le premier appareil d'équilibrage de trafic est l'appareil d'équilibrage de trafic selon l'une quelconque des revendications 5 à 7, et le deuxième appareil d'équilibrage de trafic est l'appareil d'équilibrage de trafic selon la revendication 8.
